# EUROPÄISCHE PATENTSCHRIFT

(11) **EP 1 479 083 B1**
(45) Veröffentlichungstag und Bekanntmachung des Hinweises auf die Patenterteilung: **21.11.2007**
(21) Anmeldenummer: 03702395.9
(22) Anmeldetag: 08.01.2003
(51) Int. Cl.: G21C 3/352

(54) **ABSTANDHALTER F R EIN BRENNELEMENT EINES SIEDEWASSERREAKTORS**
SPACER FOR A FUEL ELEMENT OF A BOILING WATER REACTOR
ECARTEUR DESTINE A UN ELEMENT COMBUSTIBLE D'UN REACTEUR A EAU BOUILLANTE

(30) Priorität: 27.02.2002 DE 10208502
(43) Veröffentlichungstag der Anmeldung: 24.11.2004
(73) Patentinhaber: AREVA NP GmbH, 91058 Erlangen (DE)
(72) Erfinder: LIEBLER-RANZUS, Michael, 91560 Heilsbronn (DE)
(74) Vertreter: Mörtel & Höfner
(86) Internationale Anmeldenummer: PCT/EP2003/000081
(87) Internationale Veröffentlichungsnummer: WO 2003/073435

(56) Entgegenhaltungen:
- EP-A- 0 557 085
- GB-A- 1 116 811
- US-A- 4 999 153
- US-A- 5 307 392
- PATENT ABSTRACTS OF JAPAN vol. 2000, no. 24, 11. Mai 2001 (2001-05-11) & JP 2001 194479 A (NUCLEAR FUEL IND LTD), 19. Juli 2001 (2001-07-19)
- PATENT ABSTRACTS OF JAPAN vol. 014, no. 296 (P-1067), 26. Juni 1990 (1990-06-26) & JP 02 093398 A (NUCLEAR FUEL IND LTD), 4. April 1990 (1990-04-04)
- PATENT ABSTRACTS OF JAPAN vol. 014, no. 389 (P-1095), 22. August 1990 (1990-08-22) & JP 02 147889 A (NIPPON ATOM IND GROUP CO LTD;OTHERS: 01), 6. Juni 1990 (1990-06-06)
- PATENT ABSTRACTS OF JAPAN vol. 1997, no. 03, 31. März 1997 (1997-03-31) & JP 08 297183 A (HITACHI LTD), 12. November 1996 (1996-11-12)
- PATENT ABSTRACTS OF JAPAN vol. 015, no. 435 (P-1272), 6. November 1991 (1991-11-06) & JP 03 181887 A (NUCLEAR FUEL IND LTD), 7. August 1991 (1991-08-07)
- PATENT ABSTRACTS OF JAPAN vol. 1997, no. 03, 31. März 1997 (1997-03-31) & JP 08 304574 A (NUCLEAR FUEL IND LTD), 22. November 1996 (1996-11-22)
- PATENT ABSTRACTS OF JAPAN vol. 014, no. 136 (P-1021), 14. März 1990 (1990-03-14) & JP 02 002980 A (MITSUBISHI NUCLEAR FUEL CO LTD), 8. Januar 1990 (1990-01-08)

## Beschreibung

Die Erfindung betrifft einen Abstandhalter für ein Brennelement eines Siedewasserreaktors. Ein solcher z.B. aus der US 4,999,153 bekannter Abstandhalter setzt sich in der Regel aus kreuzweise ineinandergesteckten Innenstegen und einen diese umfassenden, aus Außenstegen gebildeten Rahmen zusammen. In den Außenstegen sind Öffnungen vorhanden, die dazu dienen, einen an der Innenwandung des Brennelementkastens entlangströmenden Kühlmittelfilm abzulösen und nach innen zu leiten, damit das Kühlmittel mit den Brennstäben in Kontakt kommt. Der obere Rand der Öffnung und der sich daran anschließende Wandbereich der Außenstege ist nach außen vorgewölbt. Diese Ausgestaltung wird üblicherweise als Kieme bezeichnet.

Zur Reparatur eines Brennelements, beispielsweise zum Austausch eines Brennstabes, ist es erforderlich, dass das Brennelementbündel aus dem Strömungsführungskasten herausgenommen und später wieder eingeführt werden muss. Der Überstand der Kiemen ist zwar so bemessen, dass im Einbauzustand zwischen den Kiemen und dem Brennelementkasten ein Spalt vorhanden ist, um etwa strahleninduziertes Breitenwachstum im Falle von Abstandhaltern aus Zirkaloy zu ermöglichen. Dieser Spalt verhindert aber nicht, dass die Kiemen mit der Innenwand des Brennelementkastens in Berührung kommmt. Dabei besteht die Gefahr, dass die vorstehenden Kiemen an der Innenseite des Brennelements entlangschaben und feine Metallspäne abheben oder dass sie selbst beschädigt werden.

Aufgabe der Erfindung ist es daher, einen Abstandhalter vorzuschlagen, der hier Abhilfe schafft.

Diese Aufgabe wird gemäß Anspruch 1 dadurch gelöst, dass an der Außenseite der Außenstege mehrere, durch Wandausbuchtung gebildete Vorsprünge vorhanden sind, deren Überstand größer ist, als der Überstand der Kiemen. Auf diese Weise ist wirksam verhindert, dass beim Einführen eines Brennelementbündels in einen Strömungsführungskasten Kiemen beschädigt oder Metallpartikel vom Strömungsführungskasten abgehobelt werden. Die Vorsprünge sind unterhalb der Kiemen angeordnet. Auf diese Weise ist verhindert, dass diese beim Einführen des Brennstabbündels in den Strömungsführungskasten, was ja aus Strahlenschutzgründen unter einer Wasserüberdeckung von mehreren Metern erfolgen muss, mit dessen oberen Rand kollidieren. In die gleiche Richtung zielt die Maßnahme, die Vorsprünge an ihrem unteren Rand mit einer zum Zentrum des Abstandhalters hin abgewinkelten Abweiserfahne zu versehen. Wenn sich das Brennstabbündel beim Einführen in den Strömungsführungskasten verdrillt, treffen zuerst die Abweiserfahnen auf die Oberkante des Strömungsführungskastens auf und bewirken eine Zentrierung des Brennstabbündels und ein reibungsloses Einführen. Die Vorsprünge erfüllen dann eine Doppelfunktion, da diese gleichzeitig als Einfädelhilfe dienen. Vorzugsweise sind die Vorsprünge im Bereich eines Innensteges angeordnet, wodurch die auf sie einwirkenden Kräfte in die Innenstege weitergeleitet werden. Außerdem lässt sich der Innensteg sowohl zur Abstützung des Vorsprungs, als auch der an ihn angeformten Abweiserfahne nutzen. Dazu weist dieser einen ersten und zweiten Stützabschnitt auf, wobei sich der erste Stützabschnitt in den Vorsprung hineinerstreckt und dort mit dessen Innenwandung zusammenwirkt und wobei der zweite Abschnitt eine Schrägkante aufweist, an der die Abweiserfahne anliegt.

Die Fixierung eines Innenstegs im Bereich eines Vorsprungs wird bei einer bevorzugten Ausgestaltung dadurch bewerkstelligt, dass in der Wand des Vorsprung ein sich axial bzw. in Längsrichtung des Brennelements erstreckender Schlitz vorhanden ist, der vom ersten Stützabschnitt zumindest teilweise durchgriffen ist. Der Schlitz ist in einer außenseitigen Vertiefung des Vorsprungs angeordnet. Dies hat den Vorteil, dass dort eine Schweißnaht zum Verbinden des Innenstegs mit dem Außensteg angebracht werden kann, ohne dass diese die Außenfläche des Vorsprungs überragt.

Die Erfindung wird nun anhand eines in den beigefügten Zeichnungen dargestellten Ausführungsbeispiels näher erläutert. Es zeigen:
- Fig.1: den Ausschnitt eines Abstandhalters in Seitenansicht,
- Fig.2: eine Draufsicht in Richtung des Pfeils II in Fig.1,
- Fig.3: den teilweise geschnittenen Ausschnitt eines nahe eines Strömungsführungskastens angeordneten Abstandshalters, und
- Fig. 4: das Detail IV von Fig. 3 in vergrößertem Maßstab.

Wie den Abbildungen zu entnehmen ist, setzt sich ein Abstandshalter 1 für das Brennelement eines Siedewasserreaktors aus kreuzweise ineinandergesteckten Innenstegen 2 und einem diese umfassenden Rahmen aus Außenstegen 3 zusammen. Die Innenstege 2 bilden Zellen, die im Montagezustand von Brennstäben 4 durchsetzt sind. An der Außenseite der Außenstege 3 sind mehrere Kiemen 5 angeordnet. Diese umfassen eine Öffnung 6 deren oberer Rand und der sich daran und anschließende Wandabschnitt 7, nach außen vorgewölbt sind. Um zu verhindern, dass die Kiemen 5 bzw. der Wandabschnitt 7 beim Einführen eines Brennstabbündels in einen Brennelementkasten 8 mit dessen Innenwand in Berührung kommen, stehen aus der Außenseite der Außenstege 3 durch Wandausbuchtung gebildete Vorsprünge 9 hervor. Der Überstand der Vorsprünge 9 ist dabei größer als der Überstand der Kiemen 5, so dass im Montagezustand, bzw. während des Einführens eines Brennstabbündels in einen Brennelementkasten 8 der Abstand 10 der Kiemen 5 zur Innenseite des Brennelementkastens 8 größer ist, als der Abstand 11 zwischen dem Vorsprung 9 und dem Brennelementkasten 8.

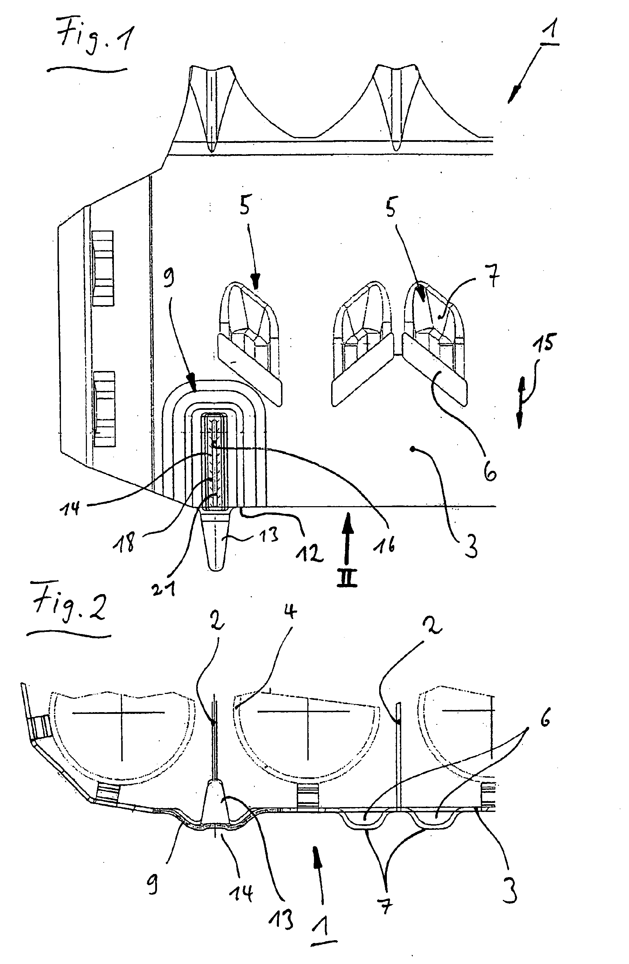

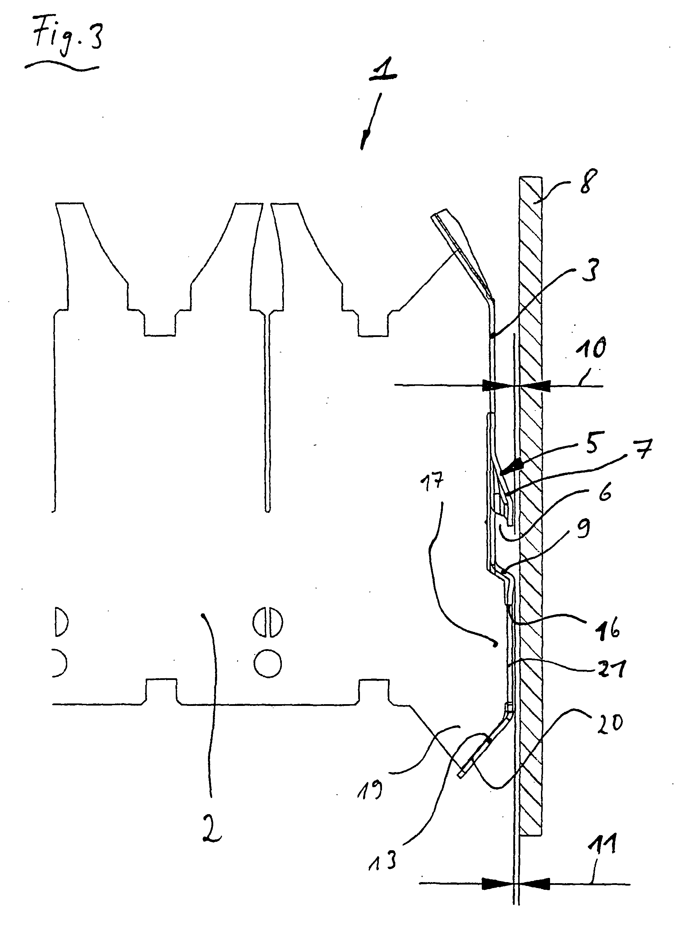

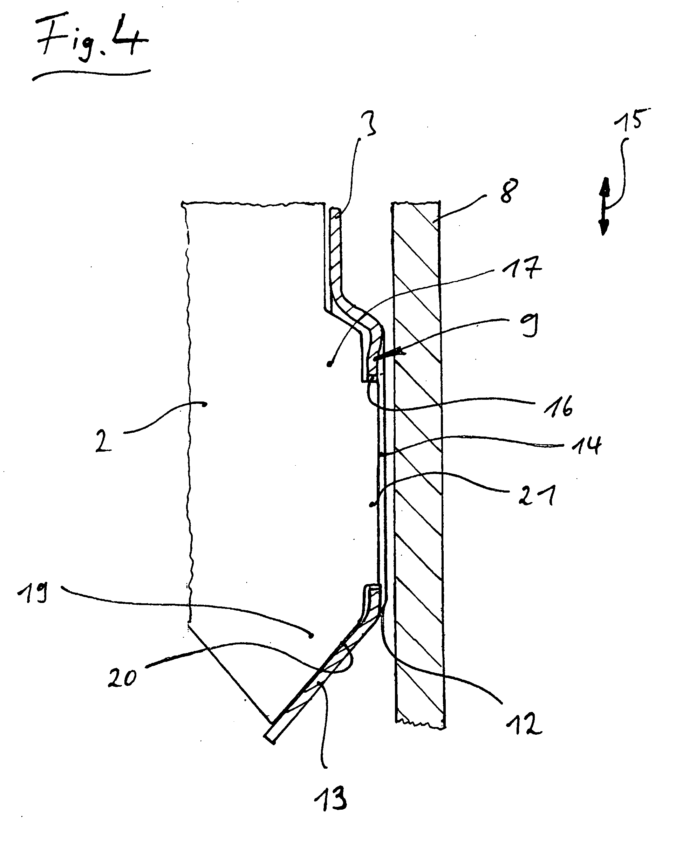

An der Unterkante 12 des Vorsprungs 9 ist eine etwa spatelförmige und nach innen gebogene Abweiserfahne 13 angeformt. In der Außenseite des Vorsprungs 9 ist eine Vertiefung 14 vorhanden, in der ein sich in Axialrichtung 15 erstreckender Schlitz 16 angeordnet ist. Wie insbesondere Fig.3 und 4 deutlich zu entnehmen ist, ist an dem Vorsprung 9 zugeordneten Innensteg 2 ein über dessen Seitenkante hinausragender erster Stützabschnitt 17 angeformt, der sich in den Vorsprung 9 hineinerstreckt, wobei der Stützabschnitt 17 eine der Innenkontur des Vorsprungs 9 entsprechende Umrissform aufweist. An den ersten Stützabschnitt 17 ist eine Verbindungslasche 21 angeformt, die den Schlitz 16 durchgreift. Die Verbindungslasche 21 ist von der Außenseite des Vorsprungs 9 her mit einer Schweißnaht 18 am Außensteg 3 fixiert. An die Unterkante des Innenstegs 2 ist ein zweiter Stützabschnitt 19 angeformt, der eine zur Schrägstellung der Abweiserfahne 13 komplementär ausgerichtete Schrägkante 20 aufweist. An dieser stützt sich die Abweiserfahne 13 ab.

### Bezugszeichenliste

- 1: Abstandhalter
- 2: Innensteg
- 3: Außensteg
- 4: Brennstab
- 5: Kieme
- 6: Öffnung
- 7: Wandabschnitt
- 8: Brennelementkasten
- 9: Vorsprung
- 10: Abstand
- 11: Abstand
- 12: Unterkante
- 13: Abweiserfahne
- 14: Vertiefung
- 15: Axialrichtung
- 16: Schlitz
- 17: erster Stützabschnitt
- 18: Schweißnaht
- 19: zweiter Stützabschnitt
- 20: Schrägkante
- 21: Verbindungslasche

## Patentansprüche

1. Abstandhalter (1) für ein Brennelement eines Siedewasserreaktors, mit einem Rahmen aus Außenstegen (3) und kreuzweise zueinander ausgerichteten Innenstegen (2), wobei an der Außenseite der Außenstege (3) Kiemen (5) angeordnet sind,
**dadurch gekennzeichnet,**
**dass** an der Außenseite der Außenstege (3) mehrere durch eine Wandausbuchtung gebildete Vorsprünge (9) vorhanden sind,
- deren Überstand größer ist als der Überstand der Kiemen (5),
- die unterhalb der Kiemen (5) und im Bereich eines Innensteges (2) angeordnet sind, und an deren Unterkante (12), die weiter aus der Außenseite der Außenstege (3) hervorragt als die Kiemen (5), eine Abweiserfahne (13) angeformt ist.

2. Abstandhalter nach Anspruch 1,
**dadurch gekennzeichnet,**
**dass** an den Innensteg (2) ein über dessen Seitenkante seitlich überstehender erster Stützabschnitt (17) angeformt ist, der sich in den Vorsprung (9) hineinerstreckt und mit diesem verbunden ist.

3. Abstandhalter nach Anspruch 2,
**dadurch gekennzeichnet,**
**dass** an die Unterkante des Innenstegs (2) ein zweiter, eine Schrägkante (20) aufweisender Stützabschnitt (19) angeformt ist, wobei sich die Abweiserfahne (13) an der Schrägkante (20) abstützt.

4. Abstandhalter nach Anspruch 2 oder 3,
**dadurch gekennzeichnet,**
**dass** in der Außenseite des Vorsprungs (9) eine sich in Axialrichtung (15) erstreckende Vertiefung (14) vorhanden ist, in der ein vom ersten Stützabschnitt (17) zumindest teilweise durchgriffener Schlitz (16) angeordnet ist.

## Claims

1. Spacer (1) for a fuel element of a boiling water reactor, having a frame comprising outer webs (3) and inner webs (2) which are oriented crossways with respect to one another, with gills (5) arranged on the outer side of the outer webs (3), **characterized in that** a plurality of projections (9), which are formed by a bulge in the wall, are present on the outer side of the outer webs (3),
- project to a greater extent than the gills (5),
- and are arranged below the gills (5) and in the region of an inner web (2), and a deflector lug (13) is formed integrally on their lower edge (12), which projects further from the outer side of the outer webs (3) than the gills (5).

2. Spacer according to Claim 1, **characterized in that** a first supporting section (17), which projects laterally beyond the side edge of the inner web, extends into the projection (9) and is connected to the latter, is formed integrally on the inner web (2).

3. Spacer according to Claim 2, **characterized in that** a second supporting section (19), which has an inclined edge (20), is formed integrally on the lower edge of the inner web (2), with the deflector lug (13) being supported against the inclined edge (20).

4. Spacer according to Claim 2 or 3, **characterized in that** a recess (14), which extends in the axial direction (15) and in which there is a slot (16) which is at least partially penetrated by the first supporting section (17), is present in the outer side of the projection (9).

## Revendications

1. Entretoise (1) pour assemblage combustible d'un réacteur à eau bouillante avec un cadre de lames extérieures (3) et de lames intérieures (2) dirigées de manière croisée les unes envers les autres, sachant que sur le côté extérieur des lames extérieures (3), des branches (5) sont placées,
**caractérisée en ce que**
sur le côté extérieur des lames extérieures (3), plusieurs saillies (9) formées par une grosseur de la paroi sont présentes
- dont la projection est supérieure à la projection des branches (5),
- qui sont placées en-dessous des branches (5) et au niveau d'une lame intérieure (2) et sur le rebord inférieur desquelles (12) un talon de détecteur (13) qui fait saillie plus loin que le côté extérieur des lames extérieures (3) comme les branches (5), est formé.

2. Entretoise selon la revendication 1,
**caractérisée en ce que**
sur la lame intérieure (2) une première section d'appui (17) en saillie latéralement sur son rebord latéral est formée qui s'étend dans la saillie (9) et est reliée à celle-ci.

3. Entretoise selon la revendication 1,
**caractérisée en ce que**
sur le rebord inférieur de la lame intérieure (2) une deuxième section d'appui (19) présentant un rebord oblique (20) est formée, moyennant quoi le talon de déflecteur (13) s'appuie sur le rebord oblique (20).

4. Entretoise selon l'une des revendications 2 ou 3,
**caractérisée en ce que**
dans le côté extérieur de la saillie (9) un renfoncement (14) s'étendant dans la direction axiale (15) est prévu, dans lequel une fente (16) mise en prise au moins partiellement par la première section d'appui (17) est disposée.
